# EUROPÄISCHE PATENTSCHRIFT

(11) **EP 4 045 598 B1**
(45) Veröffentlichungstag und Bekanntmachung des Hinweises auf die Patenterteilung: **19.11.2025**
(21) Anmeldenummer: 20781548.1
(22) Anmeldetag: 05.10.2020
(51) Int. Cl.: C08L 91/06

(54) **TEILVERSEIFTE REISKLEIEWACHSOXIDATE**
PARTIALLY SAPONIFIED RICE BRAN WAX OXIDATES
PRODUITS D'OXYDATION DE CIRE DE SON DE RIZ PARTIELLEMENT SAPONIFIÉS

(30) Priorität: 15.10.2019 EP 19203444
(43) Veröffentlichungstag der Anmeldung: 24.08.2022
(73) Patentinhaber: Clariant International Ltd, 4132 Muttenz (CH)
(72) Erfinder: KRATZER, Philipp, 86637 Wertingen (DE); BROEHMER, Manuel, 82194 Gröbenzell (DE); FELL, Rainer, 86368 Gersthofen (DE)
(74) Vertreter: Clariant Produkte (Deutschland) GmbH
(86) Internationale Anmeldenummer: PCT/EP2020/077782
(87) Internationale Veröffentlichungsnummer: WO 2021/073909

(56) Entgegenhaltungen:
- WO-A1-2014/060081
- WO-A1-2014/060082
- WO-A1-2014/131514
- WO-A1-2014/166614
- WO-A1-2017/108542
- CHARLES W BUFFA: "RICE BRAN WAX. A NEW WAX FOR COSMETICS, DRUGS, AND TOILETRIES.", COSMETICS & TOILETRIES, vol. 91, no. 10, 1 January 1976 (1976-01-01), US, pages 14 - 16, XP055658779, ISSN: 0361-4387
- S. H YOON ET AL: "Composition of waxes from crude rice bran oil", JOURNAL OF THE AMERICAN OIL CHEMISTS' SOCIETY, 1 December 1982 (1982-12-01), Berlin/Heidelberg, pages 561 - 563, XP055658981, Retrieved from the Internet <URL:https://link.springer.com/article/10.1007/BF02636324> DOI: 10.1007/BF02636324
- JUNGHONG KIM: "Wax extraction and characterization from full-fat and defatted rice bran (Thesis)", 1 January 2008 (2008-01-01), Louisiana, USA, pages 1 - 136, XP055659292, Retrieved from the Internet <URL:https://digitalcommons.lsu.edu/gradschool_dissertations/886> [retrieved on 20200120]
- AVISH D MARU ET AL: "Studies on Physico-Chemical Properties of Rice Bran Wax and its Comparison with Carnauba Wax", INTERNATIONAL JOURNAL OF PHARMACEUTICAL AND PHYTOPHARMACOLOGICAL RESEARCH, vol. 203, no. 1, 1 January 2012 (2012-01-01), pages 203 - 207, XP055658816, ISSN: 2250-1029
- PANOTH ABHIRAMI ET AL: "Characterization of Refined Rice Bran Wax: An Alternative Edible Coating", INTERNATIONAL JOURNAL OF CURRENT MICROBIOLOGY AND APPLIED SCIENCES, vol. 8, no. 05, 10 May 2019 (2019-05-10), pages 91 - 97, XP055658819, ISSN: 2319-7692, DOI: 10.20546/ijcmas.2019.805.012

## Beschreibung

Die Erfindung betrifft teilverseifte Reiskleiewachsoxidate, ein Verfahren zur Herstellung dieser Produkte und deren Verwendung zu land- oder forstwirtschaftlichen Zwecken, als Additiv in der Kunststoffverarbeitung, in Pflegemitteln, in Druckfarben und/oder in Lacken.

Die Oxidation von fossilen und nichtfossilen Naturwachsen mit Chromschwefelsäure ist seit Anfang des 20. Jahrhunderts bekannt und wird technisch anhand von fossilen Montanwachsen seit 1927 im heute noch betriebenen "Gersthofener Verfahren" durchgeführt. Neben fossilem Montanwachs lassen sich mit Hilfe dieser Chromsäurebasierten Verfahren auch nachwachsende Naturwachse, wie z. B. Carnaubawachs und Candelillawachs oxidieren. Ein Verfahren zur Chromsäureoxidation von Carnaubawachs wurde in 2004 durch DE-A 10231886 beschrieben. Naturbelassene Carnaubawachse (fettgrau, Typ 4; mittelgelb, primagelb und flor, Typen 3 bis 1) und Rohmontanwachs (schwarz) sind jedoch deutlich dunkel gefärbt. Die Oxidation mit Chromschwefelsäure führt zu helleren Wachsprodukten. Allerdings führt das Chromsäure-Bleichen dieser Naturwachse, in Abhängigkeit von der eingesetzten Chromsäuremenge, meist zu hohen Säurezahlen, typischerweise im Bereich von 130 bis 160 mg KOH/g.

Bei der Oxidation mit Chromsäure kommt es im Wesentlichen zu einer Spaltung der Wachsester sowie einer in-situ-Oxidation der entstandenen Wachsalkohole zu Wachssäuren. Die Höhe der Säurezahl ist ein Maß für den Gehalt an freien Wachssäuren. Die typischen Umsätze solcher Oxidationen liegen im Bereich von 50-90% bezüglich der Estergruppen. Die auf diese Weise gebleichten Naturwachse besitzen zusätzlich zur gewünschten Aufhellung eine höhere Verseifungszahl und Säurezahl als die ungebleichten Wachse. Die Wachsoxidate können beispielsweise durch Veresterung der im Wachs und/oder Wachsoxidat enthaltenen Säuren mit Alkoholen weiter derivatisiert werden, um Produkte an ein gewünschtes Eigenschaftsprofil anzupassen.

Diese Veresterung wird häufig mit polyvalenten Alkoholen, wie z.B. Ethylenglykol, Butylenglykol oder Glycerin vorgenommen. Allerdings ist hiermit ein zusätzlicher Schritt verbunden, der aus prozessökonomischen Gründen nachteilig ist.

Ein wirtschaftlich interessantes Naturwachs ist Reiskleiewachs, das bei der Verarbeitung von Rohreis (oryza sativa) in großen Mengen als Nebenprodukt anfällt. Nachdem beim Dreschen der reifen Reispflanzen die an den Körnern haftenden Deckspelzen entfernt und weitere Spelzen-Bestandteile neben anderen Verunreinigungen in der Reismühle separiert wurden, enthalten die Reiskörner noch den Keimling und sind von der Silberhaut umschlossen. Keimling und Silberhaut werden in einem weiteren Verarbeitungsschritt durch Abschleifen entfernt und liefern neben dem geschliffenen Reis die Reiskleie. Die Reiskleie enthält Lipidanteile, die zum überwiegenden Teil aus fetten Ölen und zu einem geringeren Prozentsatz aus wachsartigen Komponenten bestehen. Die wachsartigen Komponenten finden sich in dem aus der Kleie durch Pressung oder Lösemittelextraktion gewonnenen Öl, aus dem sie aufgrund ihrer Schwerlöslichkeit bei niedrigen Temperaturen z.B. durch Ausfrieren isoliert werden können. Die berechnete potentielle Verfügbarkeit von Reiskleiewachs liegt nach Journal of Scientific & Industrial Research, 2005, Vol. 64, 866-882, würde man die gesamte Weltreisproduktion dazu nutzen, um neben Reisöl ebenfalls das Reiskleiewachs zu gewinnen, bei ca. 300.000 Tonnen pro Jahr.

Reiskleiewachs gehört nach Ullmann's Encyclopedia of Industrial Chemistry, 5th ed. 1996, Vol. A28, S. 117 zu einer Gruppe von Wachsen, der bisher nur lokale Bedeutung oder lediglich akademisches Interesse beigemessen wurde. Beschrieben wurde die Verwendung von Reiskleiewachs in der Kosmetik (EP-A 1343454; Bräutigam, Lexikon der kosmetischen Rohstoffe, Norderstedt 2010, S. 77), als Verarbeitungshilfsmittel in Kunststoffen (JP-A H10-007862 (1998); JP-A S60-011553 (1985); JP-A S49-090739 (1974)) sowie in Druckfarben und elektrophotographischen Tonern (JP-A 2010-020304; 2010).

Die chemische Zusammensetzung von Reiskleiewachs ist trotz zahlreicher analytischer Untersuchungen mit nicht übereinstimmenden Befunden offenbar nicht völlig geklärt. Sicher hingegen ist die Zusammensetzung des Wachskörpers aus Wachsestern.

Die Reiskleiewachs-Ester bestehen hauptsächlich aus Monoestern langkettiger, gesättigter, unverzweigter Monocarbonsäuren mit langkettigen, unverzweigten, aliphatischen Monoalkoholen (nachfolgend auch "genuine Ester" genannt). Vorherrschend sind im Säureanteil der Reiskleiewachs-Ester Behen- und Lignocerinsäure, mit den Kettenlängen C22 und C24, und im Alkoholanteil der Reiskleiewachs-Ester die Kettenlängen C26, C28, C30, C32 und C34. Daneben kann das Wachs freie Fettsäuren und weitere Bestandteile wie Squalen, Phosphorlipide und Sterylester enthalten.

Der Gehalt an Wachsestern in raffiniertem und entöltem Reiskleiewachs liegt in der Regel bei größer als 96 Gew.%. In nicht-entöltem Reiskleiewachs kann der Gehalt an Wachsestern, je nach Gehalt des Reiskleieöls, auch bei nur 50 Gew.% liegen. Weitere als "Mindermengen-Bestandteile" anzusehende variable Bestandteile des Reiskleiewachses sind die nicht näher spezifizierten "Dunkelstoffe", Squalen sowie der sogenannte "Gum-Anteil". Diese Komponenten führen meist zu einer in Farbe und Anwendbarkeit schwankenden und schwer zu reproduzierenden Produktqualität.

Als übliche Technik zur Aufhellung der braunen Reiskleiewachse gilt die klassische Bleichung mit Wasserstoffperoxid. Wasserstoffperoxid-gebleichte Reiskleiewachse sind gelblich und entsprechen in ihrem Estergehalt und in ihrer Säurezahl weitgehend den Ausgangswachsen. Solche Typen werden überwiegend als entölte und raffinierte Reiskleiewachse am Markt angeboten, zeigen jedoch, da die Mindermengen-Bestandteile im Produkt verbleiben, ebenfalls schwankende Produktqualität.

Durch Verseifung von Reiskleiewachsen und/oder deren Oxidaten ist es ebenfalls möglich, die Produkte zu derivatisieren, um beispielsweise ihre Eignung für kosmetische Anwendungen zu verbessern.

CN-A 108191602 aus 2018 beschreibt Reiskleiewachsoxidate, die aus entöltem Reiskleiewachs durch Oxidation mit Natriumdichromat hergestellt werden, mit einem mehrwertigen Alkohol verestert und anschließend verseift werden. Allerdings werden keine Produkteigenschaften genannt.

EP-A 2909273 aus 2015 offenbart Oxidationsprodukte von Reiskleiewachs, hergestellt durch Oxidation mit Chromsäure in Anwesenheit von Oxidations-Promotoren wie fluorierten Alkylsulfonsäuren, Aluminiumtrichlorid oder Salzsäure, oder unter besonders heftigem Rühren. Hierdurch werden hohe Säurezahlen angestrebt. Die Reiskleiewachsoxidate werden im Anschluss an die Oxidation verestert und dann teilverseift. In EP-A 2909274 werden Reiskleiewachsoxidate beschrieben, die vor und nach der Oxidation teilverseift werden. Auch hier werden hohe Säurezahlen erreicht. In JP-B S36-005526 (1961) wird die Herstellung von lösemittelhaltigen Politurmassen beschrieben, in denen ein chemisch modifiziertes Wachs auf der Grundlage von Reiskleiewachs enthalten ist. Die Modifizierung erfolgt durch Oxidation von rohem Reiskleiewachs mit Chromsäure oder Dichromatsalzen. Es werden dabei Säurezahlen von 40-45 mg KOH/g erreicht. Das Reiskleiewachsoxidat kann im Anschluss an die Oxidation verseift werden. Allerdings werden auch hier keine Produkteigenschaften genannt.

WO2014/060081 und WO2014/060082 offenbaren Methoden zur Oxidation, Versterung, und Teilverseifung von Reiskleiwachs.

Es besteht ein Bedürfnis nach einem Verfahren, um gezielt teilverseifte Reiskleiewachsoxidate mit einem hohen Anteil an unverseiften Monoestern langkettiger, gesättigter, unverzweigter Monocarbonsäuren mit langkettigen, unverzweigten, aliphatischen Monoalkoholen (genuinen Estern) darzustellen.

Es wurde nun überraschend gefunden, dass die Oxidation von Reiskleiewachs mit anschließender Verseifung mit basischen Metallsalzen zu teilverseiften Reiskleiewachsen mit einem hohen Anteil an genuinen Estern führt, ohne dass ein Veresterungsschritt in dem gesamten Verfahren notwendig ist. Diese teilverseiften Reiskleiewachsoxidate zeichnen sich insbesondere durch hohe Thermostabilität und eine helle Farbe aus.

Ein Gegenstand der Erfindung ist daher ein Verfahren zur Herstellung eines teilverseiften Reiskleiewachsoxidats (V),
umfassend die Schritte:
i) Bereitstellen eines Reiskleiewachses (R), enthaltend weniger als 20 Gew.-%, bezogen auf das Gesamtgewicht des Reiskleiewachses (R), an mehrfachen Estern gebildet aus mehrwertigen Alkoholen und aliphatischen Carbonsäuren mit 8 bis 20 Kohlenstoffatomen;
ii) Bereitstellen einer Mischung (M) aus Chromtrioxid und Schwefelsäure;
iii) Durchführen der Oxidation des Reiskleiewachses (R) durch Umsetzung des Reiskleiwachses (R) mit der Mischung (M) unter Rühren und unter Rühren bei einer Temperatur von 90 bis 150 °C, um ein Reiskleiewachsoxidat (O) zu erhalten;
iv) Beenden der Umsetzung und Ruhenlassen der in Schritt iii) erhaltenen Reaktionsmischung bis zur Trennung der organischen Phase von der wässrigen Phase;
v) Abtrennung der organischen Phase;
vi) optionales Entfernen von Rückständen enthaltend Chromverbindungen aus der organischen Phase, um das Reiskleiewachsoxidat (O) in gereinigter Form zu erhalten,
vii) optionales Wiederholen der Folge von Schritten ii) bis vi), wobei anstelle des Reiskleiewachses (R) das Reiskleiewachsoxidat (O), gegebenenfalls in gereinigter Form, eingesetzt wird,
viii) Verseifen des Reiskleiewachsoxidats (O), gegebenenfalls in gereinigter Form, durch Umsetzung mit einem basischen Salz, vorzugsweise einem basischen Metallsalz, insbesondere ausgewählt aus Alkalimetallhydroxiden und Erdalkalimetallhydroxiden,
wobei der Reaktionsmischung in den Schritten iii) bis Schritt viii), vorzugsweise in allen Schritten des gesamten Verfahren, keine Alkohol-Komponente zugegeben wird.

Bei dem in Schritt i) bereitgestellten Reiskleiewachs (R) kann es sich um ein beliebiges Reiskleiewachs handeln, sofern es einen Anteil an mehrfachen Estern, gebildet aus mehrwertigen Alkoholen und aliphatischen Carbonsäuren mit 8 bis 20 Kohlenstoffatomen, von kleiner als 20 Gew.-%, vorzugsweise kleiner als 5 Gew.-%, besonders vorzugsweise 0,1 bis 2 Gew.-%, bezogen auf das Gesamtgewicht des Reiskleiewachses (R) hat.

Der gewünschte Anteil an mehrfachen Estern gebildet aus mehrwertigen Alkoholen und aliphatischen Carbonsäuren mit 8 bis 20 Kohlenstoffatomen kann bereits in dem Reiskleiewachs im Rohzustand enthalten sein, kann allerdings auch durch eine Vorbehandlung des Reiskleiewachses eingestellt werden. Vorzugsweise ist der Anteil bereits in dem Reiskleiewachs (R) im Rohzustand enthalten. In diesem Fall ist es bevorzugt, dass das Reiskleiewachs (R) nicht vorbehandelt wird.

Sind hingegen Anteile an mehrfachen Estern, gebildet aus mehrwertigen Alkoholen und aliphatischen Carbonsäuren mit 8 bis 20 Kohlenstoffatomen, 20 Gew.-% oder höher, muss das Reiskleiewachs (R) vor der Bereitstellung in Schritt i) vorbehandelt werden. In diesem Fall ist es von Vorteil, wenn die Vorbehandlung keine Verseifung der im Reiskleiewachs (R) enthaltenen Ester umfasst.

Stattdessen ist eine Extraktion der mehrfachen Estern gebildet aus mehrwertigen Alkoholen und aliphatischen Carbonsäuren mit 8 bis 20 Kohlenstoffatomen mit einem oder mehreren organischen Lösungsmitteln bevorzugt, wobei die Extraktion durchgeführt wird, bis der gewünschte Anteil an mehrfachen Estern, gebildet aus mehrwertigen Alkoholen und aliphatischen Carbonsäuren mit 8 bis 20 Kohlenstoffatomen, von kleiner als 20 Gew.-% erreicht wird. Geeignet sind beliebige organische Lösungsmittel, die Öle und Fette lösen können, beispielsweise Ethylacetat oder Aceton, vorzugsweise Ethylacetat.

Bei den mehrfachen Estern, gebildet aus mehrwertigen Alkoholen und aliphatischen Carbonsäuren mit 8 bis 20 Kohlenstoffatomen, handelt es sich vorzugsweise um Di- und Triglyceride von aliphatischen Carbonsäuren mit 8 bis 20 Kohlenstoffatomen, insbesondere um Öle, die von Natur aus in Reiskleie enthalten sind, vor Allem um Reiskleieöl. Entsprechend kann es sich bei der Extraktion mit einem organischen Lösungsmittel um eine Entölung handeln. In diesem Fall kann der Anteil an mehrfachen Estern, gebildet aus mehrwertigen Alkoholen und aliphatischen Carbonsäuren mit 8 bis 20 Kohlenstoffatomen, von kleiner als 20 Gew.-% auch als Ölgehalt des Reiskleiewachses bezeichnet werden.

Vorzugsweise wird das Reiskleiewachs (R), unabhängig von dem Anteil an mehrfachen Estern, gebildet aus mehrwertigen Alkoholen und aliphatischen Carbonsäuren mit 8 bis 20 Kohlenstoffatomen im Rohzustand, zu keinem Zeitpunkt vor der Oxidation durch Verseifung vorbehandelt.

Die in Schritt ii) bereitgestellte Mischung (M) aus Chromtrioxid und Schwefelsäure kann eine beliebige Mischung sein, sofern diese in der Lage ist, oxidierbare Bestandteile von Reiskleiewachs zu oxidieren. Häufig werden solche Mischungen aus Chromtrioxid und Schwefelsäure auch als Chomschwefelsäure bezeichnet. Bei der Schwefelsäure handelt es sich um konzentrierte Schwefelsäure mit einem Anteil an Schwefelsäure von mindestens 90 Gew.-%, vorzugsweise mindestens 96 Gew.-%, besonders vorzugsweise mindestens 99 Gew.-%. Diese kann optional rauchende Schwefelsäure sein, also zusätzlich Schwefeltrioxid enthalten. Die Konzentration von Chromtrioxid in der Mischung (M) beträgt vorzugsweise 50 bis 200 g/L, besonders vorzugsweise 70 bis 150 g/L, ganz besonders vorzugsweise 80 bis 120 g/L.

In Schritt iii) des erfindungsgemäßen Verfahrens wird die Oxidation des Reiskleiewachses (R) durch Umsetzung des Reiskleiwachses (R) mit der Mischung (M) unter Rühren und bei einer Temperatur von 80 bis 150 °C, vorzugsweise von 90 bis 140 °C, besonders vorzugsweise von 105 bis 130 °C durchgeführt, um ein Reiskleiewachsoxidat (O) zu erhalten.

Das Gewichtsverhältnis von insgesamt eingesetztem Chromtrioxid zu eingesetztem Reiskleiewachs (R) ist vorzugsweise von 1:1 bis 3:1, insbesondere von 1,1:1 bis 3:1, besonders vorzugsweise von 1,2:1 bis 2,5:1.

Dieser Schritt kann optional in mehrere Schritte unterteilt sein. Beispielsweise kann Schritt iii) das Vorlegen der Mischung (M) und anschließendes Zugeben des Reiskleiewachses (R) umfassen. Alternativ kann Schritt iii) das Vorlegen des Reiskleiewachses (R) und anschließendes Zugeben der Mischung (M) umfassen. In diesen Fällen kann die Zugabe der jeweils zweiten Komponente (R) oder (M) zum Beispiel portionsweise, kontinuierlich oder in einer Charge erfolgen, vorzugsweise portionsweise oder kontinuierlich, besonders vorzugsweise portionsweise.

Optional kann die Temperatur des Reiskleiewachses (R) und/oder der Mischung (M) während der Zugabe von der Reaktionstemperatur abweichen und erst nach erfolgter Zugabe der zweiten Komponente auf den erforderlichen Wert von 80 bis 150 °C, vorzugsweise von 90 bis 140 °C, besonders vorzugsweise von 105 bis 130 °C eingestellt werden. Beispielsweise kann die Temperatur bei der Zugabe einen Wert von 70 bis 130 °C, vorzugsweise von 80 bis 110 °C haben. Vorzugsweise liegt das Reiskleiewachs (R) während der Zugabe in geschmolzener Form vor.

In einer Ausführungsform wird die bereitgestellte Mischung (M) aus Chromtrioxid und Schwefelsäure vorgelegt und auf eine Temperatur von 70 bis 130 °C erwärmt, und das Reiskleiewachs (R) in festem Zustand portionsweise zugegeben. Nach erfolgter Zugabe wird die Temperatur auf 80 bis 150 °C eingestellt und die Oxidation durchgeführt.

In einer anderen Ausführungsform wird die bereitgestellte Mischung (M) aus Chromtrioxid und Schwefelsäure vorgelegt und auf eine Temperatur von 70 bis 130 °C erwärmt, und das Reiskleiewachs (R) in geschmolzenem Zustand, vorzugsweise bei einer Temperatur von 70 bis 130 °C, portionsweise zugegeben. Nach erfolgter Zugabe wird die Temperatur auf 80 bis 150 °C eingestellt und die Oxidation durchgeführt.

In einer weiteren Ausführungsform wird das Reiskleiewachs (R) vorgelegt und bei einer Temperatur von 70 bis 130 °C geschmolzen, und die Mischung (M) aus Chromtrioxid und Schwefelsäure portionsweise kalt zugegeben. Nach erfolgter Zugabe wird die Temperatur auf 80 bis 150 °C eingestellt und die Oxidation durchgeführt.

In einer anderen Ausführungsform wird das Reiskleiewachs (R) vorgelegt und bei einer Temperatur von 70 bis 130 °C geschmolzen, und die Mischung (M) aus Chromtrioxid und Schwefelsäure portionsweise heiß, vorzugsweise bei einer Temperatur von 70 bis 130 °C, zugegeben. Nach erfolgter Zugabe wird die Temperatur auf 80 bis 150 °C eingestellt und die Oxidation durchgeführt.

In einer weiteren Ausführungsform werden Reiskleiewachs (R) und die Mischung (M) aus Chromtrioxid und Schwefelsäure zusammen bei Raumtemperatur vorgelegt und langsam auf eine Temperatur von 80 bis 150 °C erwärmt, und bei dieser Temperatur die Oxidation durchgeführt.

Zumindest die Oxidation bei 80 bis 150 °C, vorzugsweise auch die Zugabe des Reiskleiewachses (R) und/oder der Mischung (M) findet unter Rühren statt. Das Rühren kann hierbei auf beliebige Weise erfolgen, beispielsweise mit einem mechanisch betriebenen Rührwerk, oder einem magnetisch betriebenen Rührwerk. Vorzugsweise erfolgt das Rühren mit einem mechanisch betriebenen Rührwerk, besonders vorzugsweise mit einem mechanisch betriebenen Rührwerk umfassend einen KPG-Rührer.

Die Rührgeschwindigkeit in Schritt iii) liegt vorzugsweise in einem Bereich von 100 und 500 U/min (Umdrehungen pro Minute), besonders vorzugsweise von 120 bis 300 U/min, ganz besonders vorzugsweise von 170 bis 250 U/min, da bei einer Rührgeschwindigkeit unter 100 U/min die für die effiziente Oxidation benötigte Vermischung nicht gegeben ist und bei einer Rührgeschwindigkeit von über 500 U/min ein erhöhtes Risiko der Bildung einer nicht mehr trennbaren Emulsion besteht.

Die Oxidation des Reiskleiewachses in Schritt iii) bei der Temperatur von 90 bis 150 °C erfolgt über einen Zeitraum von 1 bis 12 Stunden, vorzugsweise von 6 bis 10 Stunden, besonders vorzugsweise von 7 bis 9 Stunden.

Außerdem ist es von Vorteil, wenn der Reaktionsmischung aus Reiskleiewachs (R) und der Mischung (M) keine Oxidationspromotoren zugesetzt werden, da diese häufig die Spaltung der Esterbindungen führen können und daher die Säurezahl in dem Reiskleiewachsoxidat (O) erhöhen können. Vorzugsweise werden daher keine Oxidationspromotoren, insbesondere keine Oxidationspromotoren wie z.B. Emulgatoren (z.B. Alkansulfonate, fluorierte Alkansulfonate), Tenside, polymere Tenside, stickstoffhaltige Kationtenside, Phasentransferkatalysatoren, Fenton Reagenzien Metallsalze, Salzsäure oder dergleichen bei der Oxidation eingesetzt.

Nach Erreichen der gewünschten Reaktionsdauer wird in Schritt iv) die Umsetzung beendet und die Reaktionsmischung bis zur Trennung der organischen Phase von der wässrigen Phase ruhen gelassen. Unter "Beenden der Umsetzung" ist zu verstehen, dass das Rühren unterbrochen und das Heizen beendet wird. Hierbei beginnt die Trennung der aufschwimmenden organischen Phase, enthaltend das Reiskleiewachsoxidat (O), von der absinkenden wässrigen Phase, enthaltend Schwefelsäure und Chromverbindungen. Optional kann die Reaktionsmischung vor dem Ruhenlassen in eine Vorrichtung überführt werden, in der nach der Trennung der organischen Phase von der wässrigen Phase eine Abtrennung der organischen Phase erleichtert wird. Ein Beispiel für eine solche Vorrichtung ist ein Scheidetrichter. Andere Vorrichtungen zu diesem Zweck sind dem Fachmann bekannt und hier anwendbar.

In Schritt v) wird die organische Phase enthaltend das Reiskleiewachsoxidat abgetrennt. Dies kann beispielsweise mittels Scheidetrichter erfolgen. Alternativ kann die aufschwimmende organische Phase mithilfe von geeigneten technischen Mitteln abgeschöpft werden. Ebenso ist ein Abgießen der organischen Phase über einen Gefäßrand möglich. Wege zur Abtrennung von organischen Phasen von wässrigen Phasen nach einer Phasenseparation sind dem Fachmann grundsätzlich bekannt und hier anwendbar.

Des Weiteren kann optional in Schritt vi) die abgetrennte organische Phase enthaltend das Reiskleiewachsoxidat weiter aufgearbeitet werden, um Rückstände enthaltend Chromverbindungen aus der organischen Phase zu entfernen und damit das Reiskleiewachsoxidat in gereinigter Form zu erhalten.

Die Aufarbeitung kann auf beliebige Weise erfolgen, die für die Trennung von polaren und/oder wasserlöslichen Substanzen von organischen Substanzen geeignet ist.

Beispielsweise kann eine chromatographische Aufreinigung der organischen Phase oder eine Filtration über Kieselgel erfolgen.

Vorzugsweise erfolgt das Entfernen von Rückständen enthaltend Chromverbindungen durch Waschen der organischen Phase mit einer wässrigen Lösung von Oxalsäure und/oder Schwefelsäure.

Alternativ kann das Entfernen von Rückständen enthaltend Chromverbindungen vorzugsweise durch Waschen der organischen Phase mit Wasser erfolgen. Alternativ kann das Entfernen von Rückständen enthaltend Chromverbindungen vorzugsweise durch Zentrifugieren der organischen Phase erfolgen. Unter "Waschen" ist hierbei jeweils das Vermischen der organischen Phase mit dem jeweiligen Mittel zum Waschen und anschließende Phasentrennung entsprechend Schritten iv) und v) zu verstehen.

In einer bevorzugten Ausführungsform erfolgt das Entfernen von Rückständen enthaltend Chromverbindungen durch einfaches oder mehrfaches Waschen der organischen Phase mit einer wässrigen Lösung von Oxalsäure und Schwefelsäure, gefolgt von dem einfachen oder mehrfachen Waschen der organischen Phase mit Wasser.

In einer weiteren bevorzugten Ausführungsform erfolgt das Entfernen von Rückständen enthaltend Chromverbindungen durch einfaches oder mehrfaches Waschen der organischen Phase mit einer wässrigen Lösung von Oxalsäure und Schwefelsäure, gefolgt von dem Zentrifugieren der organischen Phase.

In einer weiteren bevorzugten Ausführungsform erfolgt das Entfernen von Rückständen enthaltend Chromverbindungen durch einfaches oder mehrfaches Waschen der organischen Phase mit Wasser, gefolgt von dem Zentrifugieren der organischen Phase.

In einer besonders bevorzugten Ausführungsform erfolgt das Entfernen von Rückständen enthaltend Chromverbindungen durch einfaches oder mehrfaches Waschen der organischen Phase mit einer wässrigen Lösung von Oxalsäure und Schwefelsäure, gefolgt von dem einfachen oder mehrfachen Waschen der organischen Phase mit Wasser, gefolgt von dem Zentrifugieren der organischen Phase.

Optional kann die Folge der Schritte ii) bis vi) bis zu vier Mal wiederholt werden, wobei anstelle des Reiskleiewachses (R) das Reiskleiewachsoxidat (O), gegebenenfalls in gereinigter Form, eingesetzt wird.

Vorzugsweise wird im Schritt vii) die Folge der Schritte ii) bis vi) bis zu zwei Mal wiederholt. Besonders vorzugsweise wird im Schritt vii) die Folge der Schritte ii) bis vi) höchstens einmal wiederholt. Ganz besonders vorzugsweise wird die Folge der Schritte ii) bis vi) nicht wiederholt. Wird die Folge der Schritte ii) bis vi) wiederholt, ist es von Vorteil, wenn in jeder Wiederholung die Oxidation des Reiskleiewachses in Schritt iii) bei der Temperatur von 90 bis 150 °C über einen Zeitraum von 1 bis 12 Stunden, vorzugsweise von 6 bis 10 Stunden, besonders vorzugsweise von 7 bis 9 Stunden erfolgt.

Des Weiteren ist es in diesem Fall von Vorteil, wenn bei der ersten Durchführung der Folge der Schritte ii) bis vi) das Gewichtsverhältnis von eingesetztem Chromtrioxid zu eingesetztem Reiskleiewachs (R) mindestens 0,8:1, vorzugsweise mindestens 1:1 beträgt und in jeder weiteren Wiederholung der Folge der Schritte ii) bis vi) das Gewichtsverhältnis von eingesetztem Chromtrioxid zu eingesetztem Reiskleiewachs (R) mindestens 0,4:1, vorzugsweise mindestens 0,5:1 beträgt.

Das nach dem erfindungsgemäßen Verfahren als Zwischenstufe gewonnene Reiskleiewachsoxidat (O) hat typischerweise eine Säurezahl (Gemessen nach DIN ISO 2114 von 2002) von größer als 45 mg KOH/g und kleiner als 180 mg KOH/g, oftmals von größer als 50 mg KOH/g und kleiner als 150 mg KOH/g, in einer Ausführungsform von größer als 70 mg KOH/g bis kleiner als 130 mg KOH/g.

Das Reiskleiewachsoxidat (O) wird in Schritt viii) durch Umsetzung mit einem basischen Metallsalz verseift, um ein teilverseiftes Reiskleiewachsoxidat (V) zu erhalten.

Vorzugsweise ist das basische Metallsalz ausgewählt aus der Gruppe bestehend aus Metallhydroxiden (z.B. NaOH, KOH, Ca(OH)₂ und Zn(OH)₂, etc.), Metalloxiden (z.B. CaO, etc.), Metallcarbonaten (z.B. Na₂CO₃, CaCO₃. etc.) und wässrigen Laugen (wie z.B. NaOH, KOH, etc.). Bevorzugt sind Alkalimetallhydroxide und/oder Erdalkalimetallhydroxide, insbesondere NaOH, KOH und/oder Ca(OH)₂.

Die Verseifung in Schritt viii) wird vorzugsweise über einen Zeitraum von 0,5 bis 10 Stunden, besonders vorzugsweise über einen Zeitraum von 1 bis 8 Stunden, ganz besonders vorzugsweise über einen Zeitraum von 2 bis 6 Stunden durchgeführt. Typische Reaktionstemperaturen liegen hierbei in dem Bereich von 90 bis 150 °C, vorzugsweise von 100 bis 140 °C, besonders vorzugsweise von 115 bis 135 °C.

Ein weiterer Gegenstand der Erfindung ist ein teilverseiftes Reiskleiewachsoxidat (V) umfassend folgende Komponenten:
a) 30 bis 85 Gew.-%, bezogen auf das Gesamtgewicht des teilverseiften Reiskleiewachsoxidats (V), genuine Ester mit 42 bis 64 Kohlenstoffatomen;
b) 0 bis 70 Gew.-%, vorzugsweise 10 bis 70 Gew.-%, bezogen auf das Gesamtgewicht des teilverseiften Reiskleiewachsoxidats (V), Salze von aliphatischen Carbonsäuren mit 8 bis 36 Kohlenstoffatomen; und
c) 0 bis 5 Gew.-%, insbesondere 0 bis 3 Gew.-%, ganz besonders bevorzugt 0 bis 1 Gew.-% bezogen auf das Gesamtgewicht des teilverseiften Reiskleiewachsoxidats (V), mehrfache Ester gebildet aus mehrwertigen Alkoholen und aliphatischen Carbonsäuren mit 22 bis 36 Kohlenstoffatomen.

Vorzugsweise umfasst das erfindungsgemäße teilverseifte Reiskleiewachsoxidat (V) folgende Komponenten:
a) 30 bis 85 Gew.-%, bezogen auf das Gesamtgewicht des teilverseiften Reiskleiewachsoxidats (V), genuine Ester mit 42 bis 64 Kohlenstoffatomen;
b) 10 bis 40 Gew.-%, bezogen auf das Gesamtgewicht des teilverseiften Reiskleiewachsoxidats (V), Salze von aliphatischen Carbonsäuren mit 8 bis 36 Kohlenstoffatomen;
c) 0 bis 5 Gew.-%, insbesondere 0 bis 3 Gew.-%, ganz besonders bevorzugt 0 bis 1 Gew.-% bezogen auf das Gesamtgewicht des teilverseiften Reiskleiewachsoxidats (V), mehrfache Ester gebildet aus mehrwertigen Alkoholen und aliphatischen Carbonsäuren mit 22 bis 36 Kohlenstoffatomen;
d) 5 bis 40 Gew.-%, bezogen auf das Gesamtgewicht des teilverseiften Reiskleiewachsoxidats (V), freie aliphatische Monocarbonsäuren mit 8 bis 36 Kohlenstoffatomen, davon vorzugsweise höchstens 10 Gew.-%, bezogen auf das Gesamtgewicht des teilverseiften Reiskleiewachsoxidats (V), Lignocerinsäure;
e) 0 bis 10 Gew.-%, insbesondere 0,1 bis 5 Gew.-%, bezogen auf das Gesamtgewicht des teilverseiften Reiskleiewachsoxidats (V), freie aliphatische Alkohole mit 24 bis 36 Kohlenstoffatomen;
f) 0 bis 5 Gew.-%, insbesondere 0,1 bis 5 Gew.-%, bezogen auf das Gesamtgewicht des teilverseiften Reiskleiewachsoxidats (V), freie aliphatische Dicarbonsäuren mit 10 bis 30 Kohlenstoffatomen;
g) 0 bis 15 Gew.-%, insbesondere 0,1 bis 10 Gew.-%, bezogen auf das Gesamtgewicht des teilverseiften Reiskleiewachsoxidats (V), natürliche Bestandteile von Reiskleiewachs, die sich von a) bis f) unterscheiden.

In einer bevorzugten Ausführungsform umfasst das erfindungsgemäße teilverseifte Reiskleiewachsoxidat (V) folgende Komponenten:
a) 40 bis 85 Gew.-%, bezogen auf das Gesamtgewicht des teilverseiften Reiskleiewachsoxidats (V), genuine Ester mit 42 bis 64 Kohlenstoffatomen;
b) 10 bis 30 Gew.-%, bezogen auf das Gesamtgewicht des teilverseiften Reiskleiewachsoxidats (V), Salze von aliphatischen Carbonsäuren mit 8 bis 36 Kohlenstoffatomen;
c) 0 bis 3 Gew.-%, insbesondere 0 bis 1 Gew.-% bezogen auf das Gesamtgewicht des teilverseiften Reiskleiewachsoxidats (V), mehrfache Ester gebildet aus mehrwertigen Alkoholen und aliphatischen Carbonsäuren mit 22 bis 36 Kohlenstoffatomen;
d) 5 bis 35 Gew.-%, bezogen auf das Gesamtgewicht des teilverseiften Reiskleiewachsoxidats (V), freie aliphatische Monocarbonsäuren mit 8 bis 36 Kohlenstoffatomen, davon vorzugsweise höchstens 10 Gew.-%, bezogen auf das Gesamtgewicht des teilverseiften Reiskleiewachsoxidats (V), Lignocerinsäure;
e) 0 bis 7 Gew.-%, bezogen auf das Gesamtgewicht des teilverseiften Reiskleiewachsoxidats (V), freie aliphatische Alkohole mit 24 bis 36 Kohlenstoffatomen;
f) 0 bis 4 Gew.-%, bezogen auf das Gesamtgewicht des teilverseiften Reiskleiewachsoxidats (V), freie aliphatische Dicarbonsäuren mit 10 bis 30 Kohlenstoffatomen;
g) 0 bis 15 Gew.-%, bezogen auf das Gesamtgewicht des teilverseiften Reiskleiewachsoxidats (V), natürliche Bestandteile von Reiskleiewachs, die sich von a) bis f) unterscheiden.

In einer besonders bevorzugten Ausführungsform umfasst das erfindungsgemäße teilverseifte Reiskleiewachsoxidat (V) folgende Komponenten:
a) 50 bis 85 Gew.-%, bezogen auf das Gesamtgewicht des teilverseiften Reiskleiewachsoxidats (V), genuine Ester mit 42 bis 64 Kohlenstoffatomen;
b) 10 bis 20 Gew.-%, bezogen auf das Gesamtgewicht des teilverseiften Reiskleiewachsoxidats (V), Salze von aliphatischen Carbonsäuren mit 8 bis 36 Kohlenstoffatomen;
c) 0 bis 1 Gew.-%, bezogen auf das Gesamtgewicht des teilverseiften Reiskleiewachsoxidats (V), mehrfache Ester gebildet aus mehrwertigen Alkoholen und aliphatischen Carbonsäuren mit 22 bis 36 Kohlenstoffatomen;
d) 5 bis 30 Gew.-%, bezogen auf das Gesamtgewicht des teilverseiften Reiskleiewachsoxidats (V), freie aliphatische Monocarbonsäuren mit 8 bis 36 Kohlenstoffatomen, davon vorzugsweise höchstens 10 Gew.-%, bezogen auf das Gesamtgewicht des teilverseiften Reiskleiewachsoxidats (V), Lignocerinsäure;
e) 0 bis 5 Gew.-%, bezogen auf das Gesamtgewicht des teilverseiften Reiskleiewachsoxidats (V), freie aliphatische Alkohole mit 24 bis 36 Kohlenstoffatomen;
f) 0 bis 3 Gew.-%, bezogen auf das Gesamtgewicht des teilverseiften Reiskleiewachsoxidats (V), freie aliphatische Dicarbonsäuren mit 10 bis 30 Kohlenstoffatomen;
g) 0 bis 15 Gew.-%, insbesondere 0,1 bis 10 Gew.-%, bezogen auf das Gesamtgewicht des teilverseiften Reiskleiewachsoxidats (V), natürliche Bestandteile von Reiskleiewachs, die sich von a) bis f) unterscheiden.

Vorzugsweise ist hierbei Lignocerinsäure zu maximal 5 Gew.-%, besonders vorzugsweise maximal 3 Gew.-%, bezogen auf das Gesamtgewicht des teilverseiften Reiskleiewachsoxidats (V), in dem teilverseiften Reiskleiewachsoxidat (V) enthalten.

Die Gewichtsanteile und Kettenlängenverteilungen können beispielsweise mittels Gaschromatographie gemessen werden.

Besonders bevorzugt sind teilverseifte Reiskleiewachsoxidate (V), die nach dem erfindungsgemäßen Verfahren hergestellt sind.

Bevorzugt haben die erfindungsgemäßen Reiskleiewachsoxidate eine Nadelpenetrationszahl (NPZ) gemessen nach DIN 51579 (2010) von kleiner 10 mm⁻¹, bevorzugt kleiner 5 mm⁻¹, besonders bevorzugt kleiner 3 mm⁻¹.

Bevorzugt haben die erfindungsgemäßen Reiskleiewachsoxidate eine Nadelpenetrationszahl (NPZ) gemessen nach DIN 51579 von kleiner 10 mm⁻¹, bevorzugt kleiner 5 mm⁻¹, besonders bevorzugt kleiner 3 mm⁻¹.

Die erfindungsgemäßen teilverseiften Reiskleiewachsoxidate (V) zeichnen sich typischerweise durch einen Tropfpunkt (gemessen nach DIN ISO 2176 (1997) zwischen 80 °C und 160 °C, vorzugsweise zwischen 90 °C und 150 °C, besonders vorzugsweise zwischen 100 °C und 140 °C aus.

Des Weiteren haben die teilverseiften Reiskleiewachsoxidate (V) typischerweise eine besonders helle bis weiße Farbe. Diese lässt sich gemäß APCS Cc 13e 92 bestimmen (beispielsweise mit Lovibond ^{®} Farbbestimmungsgeräten). Vorzugsweise haben die erfindungsgemäßen teilverseiften Reiskleiewachsoxidate (V) im CIE L*a*b* Farbraum L*-Werte zwischen 70 und 100, sowie a*-Werte von kleiner als 1,5 und b*-Werte von kleiner als 20. Besonders vorzugsweise haben die erfindungsgemäßen teilverseiften Reiskleiewachsoxidate (V) im CIEL*a*b* Farbraum L*-Werte zwischen 80 und 100, sowie a*-Werte von kleiner als 1,2 und b*-Werte von kleiner als 16.

Ferner weisen die erfindungsgemäßen teilverseiften Reiskleiewachsoxidate (V) hohe Thermostabilitäten aus. Typischerweise ist der Masseverlust der teilverseiften Reiskleiewachsoxidate, gemessen nach DIN 51006 (2005) bei Erreichen einer Temperatur von 300 °C (Heizrate von 5 °C/min) kleiner als 10%, bevorzugt kleiner als 5%.

Ebenfalls Gegenstand der Erfindung ist die Verwendung der erfindungsgemäßen teilverseiften Reiskleiewachsoxidate (V) zu land- oder forstwirtschaftlichen Zwecken, als Additiv in der Kunststoffverarbeitung, in Pflegemitteln, in Druckfarben und/oder in Lacken.

Die Erfindung wird durch die nachfolgenden Beispiele und Ansprüche näher erläutert.

### Substanzcharakterisierung

Die in Tabelle 1 aufgeführten Standardmethoden, die auch in der Charakterisierung von Montanwachsen und Montanwachsderivaten angewandt werden, dienen zur Bestimmung der Kennzahlen von Reiskleiewachsen, Reiskleiewachsoxidaten und weiteren Derivaten der Reiskleiewachse.

**Tabelle 1**

| | Methode |
|---|---|
| Säurezahl (SZ) [mg KOH/g] | ISO 2114 |
| Verseifungszahl (VZ) [mg KOH/g] | ISO 3681 |
| Tropfpunkt (TP) [°C] | ISO 2176 |
| Schmelzpunkt (SP) [°C] | DIN EN ISO 11357-1 |
| Schmelzenthalpie (SE) [J/g] | DIN EN ISO 11357-1 |
| Ölgehalt (ÖG) [Gew.-%] | AOCS Ja 4-46 |
| Thermogravimetrische Analyse (TGA) [Gew.-%] | DIN 51006 |
| von 25 bis 300°C bei 5K/min, dann 30min bei 300 °C. | |
| Messung des Masseverlusts bei Erreichen von 300 °C und nach 30 min bei 300 °C | |
| CIEL*a*b*-Farbwerte (mit Lovibond Farbmessgerät) | AOCS Cc 13e-92 |
| Ca-Gehalt [Gew.-%] (CaG) | DGF M-IV 4 |
| Nadelpenetrationszahl [mm⁻¹] (NPZ) | DIN 51579 |

### Kettenlängenverteilungen

Die Kettenlängenverteilungen der Bestandteile der Reiskleiewachsoxidate wurden mittels Gaschromatographie bestimmt. Als Vergleichssubstanzen dienten Wachssäuren und Wachsalkohole mit Kohlenstoffkettenlängen zwischen C6 und C36. Wachsester mit C44 bis C58 wurden durch Kombination der Modellsubstanzen dargestellt. Um die Peaks der Gaschromatogramme der Reiskleiewachse zu identifizieren wurde zu einer Wachsprobe jeweils eine definierte Menge der einzelnen Komponenten zugegeben und eine deutliche Zunahme der Fläche des entsprechenden Peaks beobachtet. Die Messbedingungen sind in Tabelle 2 dargestellt.

**Tabelle 2**

| Säule | ZB-1 HT Phenomenex, Länge 15 m I.D. 0,25 mm, Film 0,1 µm |
|---|---|
| Detektor | 380°C FID |
| Injektor | 300°C Split 1:100 |
| Trägergas | Helium |
| Lösungsmittel | Toluol |
| Konzentration | 30mg/mL |
| Injektionsmenge | 1µl |
| Temperaturprogramm | 40 bis 380°C 5K/min; 10min bei 380°C halten |

Der Anteil an Metallsalzen von aliphatischen Carbonsäuren wurden berechnet gemäß folgender Formel: Salze [Gew.-%] = (m(Säuren im Reiskleiewachsoxidat) - m(Säuren im verseiften Reiskleiewachsoxidat) + m (Metall))/m(Ansatz) wobei m(Säuren im Reiskleiewachsoxidat) und m(Säuren im verseiften Reiskleiewachsoxidat) mittels Gaschromatographie ermittelt wurden,
m (Metall) gemäß DGF M-IV 4 ermittelt wurde und
m(Ansatz) der Masse des gesamten Ansatzes entspricht.

Als Rohstoff wurde ein Reiskleiewachs im Rohzustand (RBW 1) eingesetzt. Die Eigenschaften des Reiskleiewachses im Rohzustand sind in Tabelle 3 dargestellt.

**Tabelle 3 (Methoden, Abkürzungen und Einheiten in Tabelle 1)**

| Rohstoff | SZ | VZ | TP | SP | SE | Viskosität [mPa*s] bei 120 °C | OG | TGA |
|---|---|---|---|---|---|---|---|---|
| RBW 1 | 1,3 | 83 | 77 | 79 | -192 | 8 | 1,9 | 1,2 / 6,4 |

### Beispiele 1 bis 9

In einem 3 L Reaktionsgefäß mit Rührer, Temperaturfühler, Tropftrichter und Rückflusskühler wurde die in Tabelle 4 angegebene Menge Chromtrioxid in Schwefelsäure (Konzentration: 100g CrO₃/L) vorgelegt und auf 100°C erwärmt. Anschließend wurde geschmolzenes (90 °C) Reiskleiewachs im Rohzustand portionsweise zugegeben. Die Temperatur des Reaktionsgemisches wurde auf 110°C eingestellt und 8 h mit ca. 200 U/min mit einem KPG-Rührer gerührt. Das Heizen sowie Rühren wurde eingestellt. Sobald sich die Phasen getrennt haben wurde die wässrige Phase abgetrennt.

Dieser Vorgang wurde in den Beispielen 5 bis 7 einmal, in Beispiel 8 zweimal (mit den jeweils angegebenen Mengen an Chromtrioxid in Schwefelsäure) wiederholt, wobei anstelle des Reiskleiewachses das Reiskleiewachsoxidat aus dem jeweils vorhergehenden Durchgang eingesetzt wurde.

Die organische Phase wurde durch Waschen mit einer wässrigen Lösung von Oxalsäure und Schwefelsäure und anschließend durch Waschen mit Wasser von Chromrückständen befreit, in warme Zentrifugengläser abgelassen und zentrifugiert.

In einem 1 I Reaktionsgefäß mit Rührer, Temperaturfühler, Tropftrichter und Rückflusskühler wurde das entsprechende Reiskleiewachsoxidat unter Stickstoffatmosphäre aufgeschmolzen und mit der entsprechenden Menge Ca(OH)₂ (Beispiele 1 bis 8) oder wässrige NaOH (Beispiel 9; 9 g NaOH in 100 mL Wasser) versetzt.

Das Reaktionsgemisch wurde bis zum Erreichen der gewünschten Säurezahl gerührt und anschließend die Reaktionsmischung im heißen Zustand druckfiltriert. In Beispiel 9 wird die Reaktionsmischung zusätzlich im Vakuumtrockenschrank bis zur Massenkonstanz getrocknet (Beispiel 9).

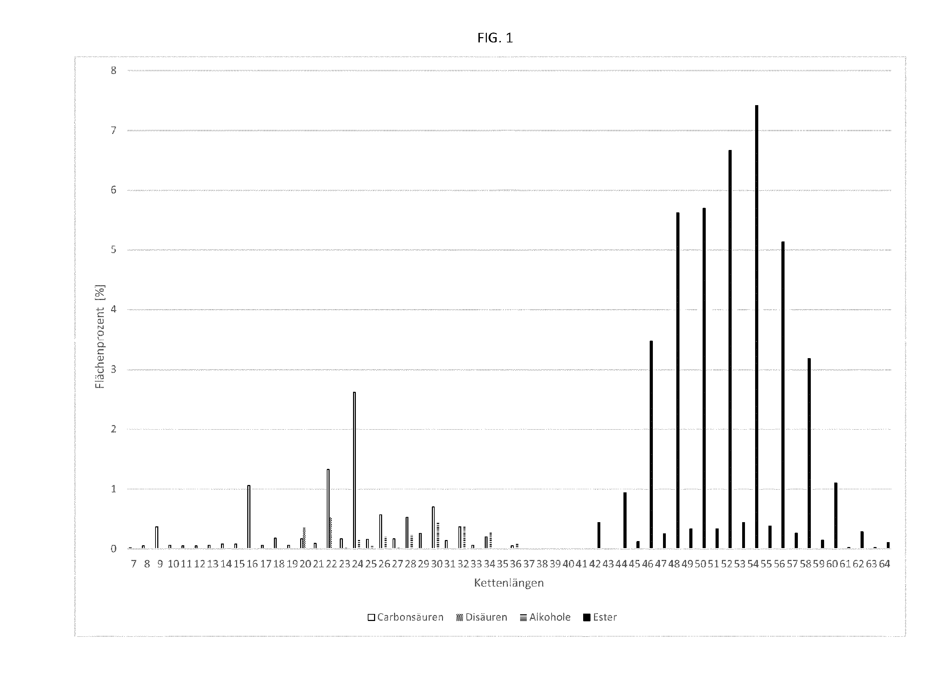

Die für Beispiel 2 gemessene Kettenlängenverteilung ist in Fig. 1 dargestellt.

**Tabelle 4: (Methoden, Abkürzungen und Einheiten in Tabelle 1)**

| Beispiel | 1 | 2 | 3 | 4 | 5 | 6 | 7 | 8 | 9 |
|---|---|---|---|---|---|---|---|---|---|
| RBW 1 | 100g | 100g | 100g | 100g | 100g | 100g | 100g | 100g | 100g |

| Oxidation | | | | | | | | | |
|---|---|---|---|---|---|---|---|---|---|
| CrO₃/ H₂SO₄ | 1,2L | 1,5L | 1,5L | 1,5L | 1,0L | 1,0L | 1,0L | 1,0L | 1,0L |
| | | | | | 0,6L | 0,6L | 1,0L | 0,8L | 0,8L |
| | | | | | | | | 0,6L | 0,6L |
| Reaktionsdauer [h] | 8 | 8 | 8 | 8 | 8 | 8 | 8 | 8 | 8 |
| | | | | | 8 | 8 | 8 | 8 | 8 |
| | | | | | | | | 8 | 8 |
| Reaktionstemperatur [°C] | 110 | 110 | 110 | 110 | 110 | 110 | 110 | 110 | 110 |
| SZ (Oxidat) | 45,7 | 51,2 | 51,2 | 51,2 | 71,1 | 71,1 | 89,6 | 123,9 | 123,9 |

| Verseifung | | | | | | | | | |
|---|---|---|---|---|---|---|---|---|---|
| Ca(OH)₂ | 5,1 g | 3,1 g | 3,7 g | 5,0 g | 5,0 g | 6,1 g | 8,9 g | 8,6 g | |
| NaOH | - | - | - | - | - | - | - | - | 9,0 g |
| Reaktionsdauer [h] | 2 | 2 | 2 | 4 | 3 | 4 | 6 | 1 | 1 |
| Reaktionstemperatur [°C] | 130 | 130 | 130 | 130 | 130 | 130 | 130 | 130 | 110 |
| SZ | 4,1 | 14,9 | 8,1 | 5,6 | 19,0 | 12,0 | 13,7 | 8,6 | 2,0 |
| VZ | 65 | 79 | 72 | 52 | 70 | 68 | 49 | 47 | 23 |
| TP | 103 | 108 | 111 | 120 | 106 | 140 | 135 | 133 | - |
| SP | 79,6 | 82,3 | 81,9 | 81,7 | 81,4 | 81,8 | 80,9 | 106,8 | 81,0 |
| SE | -162 | -209 | -208 | -200 | -197 | -194 | -186 | -173 | -186 |
| TGA | 2,30/ 7,76 | 4,37/ 7,98 | 1,66/ 5,09 | 1,45/ 4,88 | 2,31/ 5,34 | 3,39/ 12,55 | 6,86/ 19,23 | 3,01/ 8,45 | 2,54/ 7,31 |
| Viskosität [mPas] Bei 120 °C | 42 | 48 | 880 | 1160 | 333 | 5447 | - | - | - |
| CIE L* | 89,24 | 93,50 | 91,68 | 86,60 | 91,18 | 90,94 | 86,20 | 83,1 | 94,55 |
| CIE a* | 0,95 | 0,68 | 0,64 | 0,75 | 0,48 | 0,32 | 1,08 | 0,90 | 0,46 |
| CIE b* | 9,37 | 4,20 | 4,39 | 12,24 | 6,83 | 4,98 | 11,47 | 15,40 | 12,16 |
| NPZ | 1 | 1 | 1 | 1 | 1 | 1 | 1 | 1 | 1 |

## Patentansprüche

1. Verfahren zur Herstellung eines teilverseiften Reiskleiewachsoxidats (V), umfassend die Schritte:
i) Bereitstellen eines Reiskleiewachses (R), enthaltend weniger als 20 Gew.-%, bezogen auf das Gesamtgewicht des Reiskleiewachses (R), an mehrfachen Estern gebildet aus mehrwertigen Alkoholen und aliphatischen Carbonsäuren mit 8 bis 20 Kohlenstoffatomen;
ii) Bereitstellen einer Mischung (M) aus Chromtrioxid und Schwefelsäure;
iii) Durchführen der Oxidation des Reiskleiewachses (R) durch Umsetzung des Reiskleiwachses (R) mit der Mischung (M) unter Rühren und unter Rühren bei einer Temperatur von 90 bis 150 °C, um ein Reiskleiewachsoxidat (O) zu erhalten;
iv) Beenden der Umsetzung und Ruhenlassen der in Schritt iii) erhaltenen Reaktionsmischung bis zur Trennung der organischen Phase von der wässrigen Phase;
v) Abtrennung der organischen Phase;
vi) optionales Entfernen von Rückständen enthaltend Chromverbindungen aus der organischen Phase, um das Reiskleiewachsoxidat (O) in gereinigter Form zu erhalten,
vii) optionales Wiederholen der Folge von Schritten ii) bis vi), wobei anstelle des Reiskleiewachses (R) das Reiskleiewachsoxidat (O), gegebenenfalls in gereinigter Form, eingesetzt wird,
viii) Verseifen des Reiskleiewachsoxidats (O), gegebenenfalls in gereinigter Form, durch Umsetzung mit einem basischen Salz, vorzugsweise einem basischen Metallsalz, insbesondere ausgewählt aus Alkalimetallhydroxiden und Erdalkalimetallhydroxiden,
wobei der Reaktionsmischung in den Schritten iii) bis Schritt viii), vorzugsweise in allen Schritten des gesamten Verfahrens, keine Alkohol-Komponente zugegeben wird.

2. Verfahren gemäß Anspruch 1, wobei die Oxidation in Schritt iii) über einen Zeitraum von 2 bis 9 Stunden durchgeführt wird.

3. Verfahren gemäß Anspruch 1 oder 2, wobei die Folge der Schritte ii) bis vi) einmal bis viermal wiederholt wird, und wobei an Stelle des Reiskleiewachses (R) das in Schritt vii) oder gegebenenfalls viii) erhaltene Reiskleiewachsoxidat (O), gegebenenfalls in gereinigter Form, zugegeben wird.

4. Verfahren gemäß mindestens einem der Ansprüche 1 bis 3, wobei das Gewichtsverhältnis von insgesamt eingesetztem Chromtrioxid zu eingesetztem Reiskleiewachs (R) von 1:1 bis 3:1, vorzugsweise von 1,1:1 bis 3:1 ist.

5. Verfahren gemäß mindestens einem der Ansprüche 1 bis 4, wobei der Schritt des Entfernens von Rückständen enthaltend Chromverbindungen in Schritt vi) durchgeführt wird und das Waschen der organischen Phase mit einer wässrigen Lösung von Oxalsäure und/oder Schwefelsäure umfasst.

6. Verfahren gemäß mindestens einem der Ansprüche 1 bis 5, wobei der Schritt des Entfernens von Rückständen enthaltend Chromverbindungen in Schritt vi) durchgeführt wird und das Waschen der organischen Phase mit Wasser umfasst.

7. Verfahren gemäß mindestens einem der Ansprüche 1 bis 6, wobei der Schritt des Entfernens von Rückständen enthaltend Chromverbindungen in Schritt vi) durchgeführt wird und ein Zentrifugieren der organischen Phase umfasst.

8. Verfahren gemäß mindestens einem der Ansprüche 1 bis 7, wobei die Konzentration von Chromtrioxid in der Mischung (M) von 50 bis 200 g/L beträgt.

9. Verfahren gemäß mindestens einem der Ansprüche 1 bis 8, wobei die Rührgeschwindigkeit in Schritt iii) zwischen 100 und 500 U/min beträgt.

10. Verfahren gemäß mindestens einem der Ansprüche 1 bis 9, wobei das Verseifen in Schritt viii) über einen Zeitraum von 0,5 bis 10 h, vorzugsweise bei einer Temperatur von 90 bis 150 °C durchgeführt wird.

11. Verfahren gemäß mindestens einem der Ansprüche 1 bis 10, wobei der Reaktionsmischung in keinen der Schritte zusätzlichen Oxidationspromotoren zugesetzt werden.

12. Teilverseiftes Reiskleiewachsoxidat (V) umfassend folgende Komponenten:
a) 30 bis 85 Gew.-%, bezogen auf das Gesamtgewicht des teilverseiften Reiskleiewachsoxidats (V), genuine Ester mit 42 bis 64 Kohlenstoffatomen;
b) 0 bis 70 Gew.-%, vorzugsweise 10 bis 70 Gew.-%, bezogen auf das Gesamtgewicht des teilverseiften Reiskleiewachsoxidats (V), Salze von aliphatischen Carbonsäuren mit 8 bis 36 Kohlenstoffatomen; und
c) 0 bis 5 Gew.-%, insbesondere 0 bis 3 Gew.-%, bezogen auf das Gesamtgewicht des teilverseiften Reiskleiewachsoxidats (V), mehrfache Estern gebildet aus mehrwertigen Alkoholen und aliphatischen Carbonsäuren mit 22 bis 36 Kohlenstoffatomen.

13. Teilverseiftes Reiskleiewachsoxidat (V) gemäß Anspruch 12 umfassend folgende Komponenten:
a) 30 bis 85 Gew.-%, bezogen auf das Gesamtgewicht des teilverseiften Reiskleiewachsoxidats (V), genuine Ester mit 42 bis 64 Kohlenstoffatomen;
b) 10 bis 40 Gew.-%, bezogen auf das Gesamtgewicht des teilverseiften Reiskleiewachsoxidats (V), Salze von aliphatischen Carbonsäuren mit 8 bis 36 Kohlenstoffatomen;
c) 0 bis 5 Gew.-%, insbesondere 0 bis 3 Gew.-%, bezogen auf das Gesamtgewicht des teilverseiften Reiskleiewachsoxidats (V), mehrfache Estern gebildet aus mehrwertigen Alkoholen und aliphatischen Carbonsäuren mit 22 bis 36 Kohlenstoffatomen;
d) 5 bis 40 Gew.-%, bezogen auf das Gesamtgewicht des teilverseiften Reiskleiewachsoxidats (V), freie aliphatische Monocarbonsäuren mit 8 bis 36 Kohlenstoffatomen, davon vorzugsweise höchstens 10 Gew.-%, bezogen auf das Gesamtgewicht des teilverseiften Reiskleiewachsoxidats (V), Lignocerinsäure;
e) 0 bis 10 Gew.-%, insbesondere 0,1 bis 5 Gew.-%, bezogen auf das Gesamtgewicht des teilverseiften Reiskleiewachsoxidats (V), freie aliphatische Alkohole mit 24 bis 36 Kohlenstoffatomen;
f) 0 bis 5 Gew.-%, insbesondere 0,1 bis 5 Gew.-%, bezogen auf das Gesamtgewicht des teilverseiften Reiskleiewachsoxidats (V), freie aliphatische Dicarbonsäuren mit 10 bis 30 Kohlenstoffatomen;
g) 0 bis 15 Gew.-%, insbesondere 0,1 bis 10 Gew.-%, bezogen auf das Gesamtgewicht des teilverseiften Reiskleiewachsoxidats (V), natürliche Bestandteile von Reiskleiewachs, die sich von a) bis f) unterscheiden

14. Teilverseiftes Reiskleiewachsoxidat (V) gemäß Anspruch 12 oder 13, hergestellt nach einem Verfahren gemäß mindestens einem der Ansprüche 1 bis 11.

15. Verwendung des teilverseiften Reiskleiewachsoxidats (V) gemäß mindestens einem der Ansprüche 12 bis 14 zu land- oder forstwirtschaftlichen Zwecken, als Additiv in der Kunststoffverarbeitung, in Pflegemitteln, in Druckfarben und/oder in Lacken.

## Claims

1. Process for producing a partly saponified rice bran wax oxidate (V), comprising the steps of:
i) providing a rice bran wax (R) containing less than 20% by weight, based on the total weight of the rice bran wax (R), of polyesters formed from polyhydric alcohols and aliphatic carboxylic acids having 8 to 20 carbon atoms;
ii) providing a mixture (M) of chromium trioxide and sulfuric acid;
iii) performing the oxidation of the rice bran wax (R) by reacting the rice bran wax (R) with the mixture (M) while stirring and while stirring at a temperature of 90 to 150°C, in order to obtain a rice bran wax oxidate (O);
iv) stopping the reaction and leaving the reaction mixture obtained in step iii) to stand until the organic phase has separated from the aqueous phase;
v) separating off the organic phase;
vi) optionally removing residues containing chromium compounds from the organic phase in order to obtain the rice bran wax oxidate (O) in purified form,
vii) optionally repeating the sequence of steps ii) to vi) using the rice wax oxidate (O), optionally in purified form, rather than the rice bran wax (R),
viii) saponifying the rice bran wax oxidate (O), optionally in purified form, by reacting it with a basic salt, preferably a basic metal salt, especially selected from alkali metal hydroxides and alkaline earth metal hydroxides,
wherein no alcohol component is added to the reaction mixture in step iii) to step viii), preferably in all steps of the entire process.

2. Process according to Claim 1, wherein the oxidation in step iii) is performed over a period of 2 to 9 hours.

3. Process according to Claim 1 or 2, wherein the sequence of steps ii) to vi) is repeated once to four times, and wherein the rice bran wax oxidate (O) obtained in step vii) or optionally viii), optionally in purified form, is added in place of the rice bran wax (R).

4. Process according to at least one of Claims 1 to 3, wherein the weight ratio of the total amount of chromium trioxide used to rice bran wax (R) used is from 1:1 to 3:1, preferably from 1,1:1 to 3:1.

5. Process according to at least one of Claims 1 to 4, wherein the step of removing residues containing chromium compounds is conducted in step vi) and comprises the washing of the organic phase with an aqueous solution of oxalic acid and/or sulfuric acid.

6. Process according to at least one of Claims 1 to 5, wherein the step of removing residues containing chromium compounds is conducted in step vi) and comprises the washing of the organic phase with water.

7. Process according to at least one of Claims 1 to 6, wherein the step of removing residues containing chromium compounds is conducted in step vi) and comprises centrifuging of the organic phase.

8. Process according to at least one of Claims 1 to 7, wherein the concentration of chromium trioxide in the mixture (M) is from 50 to 200 g/l.

9. Process according to at least one of Claims 1 to 8, wherein the stirrer speed in step iii) is between 100 and 500 rpm.

10. Process according to at least one of Claims 1 to 9, wherein the saponifying in step viii) is performed over a period of 0.5 to 10 h, preferably at a temperature of 90 to 150°C.

11. Process according to at least one of Claims 1 to 10, wherein no additional oxidation promoters are added to the reaction mixture in any of the steps.

12. Partly saponified rice bran wax oxidate (V) comprising the following components:
a) 30% to 85% by weight, based on the total weight of the partly saponified rice bran wax oxidate (V), of genuine esters having 42 to 64 carbon atoms;
b) 0% to 70% by weight, preferably 10% to 70% by weight, based on the total weight of the partly saponified rice bran wax oxidate (V), of salts of aliphatic carboxylic acids having 8 to 36 carbon atoms; and
c) 0% to 5% by weight, especially 0% to 3% by weight, based on the total weight of the partly saponified rice bran wax oxidate (V), of polyesters formed from polyhydric alcohols and aliphatic carboxylic acids having 22 to 36 carbon atoms.

13. Partly saponified rice bran wax oxidate (V) according to Claim 12, comprising the following components:
a) 30% to 85% by weight, based on the total weight of the partly saponified rice bran wax oxidate (V), of genuine esters having 42 to 64 carbon atoms;
b) 10% to 40% by weight, based on the total weight of the partly saponified rice bran wax oxidate (V), of salts of aliphatic carboxylic acids having 8 to 36 carbon atoms;
c) 0% to 5% by weight, especially 0% to 3% by weight, based on the total weight of the partly saponified rice bran wax oxidate (V), of polyesters formed from polyhydric alcohols and aliphatic carboxylic acids having 22 to 36 carbon atoms;
d) 5% to 40% by weight, based on the total weight of the partly saponified rice bran wax oxidate (V), of free aliphatic monocarboxylic acids having 8 to 36 carbon atoms, of which preferably not more than 10% by weight, based on the total weight of the partly saponified rice bran wax oxidate (V), is lignoceric acid;
e) 0% to 10% by weight, preferably 0.1% to 5% by weight, based on the total weight of the partly saponified rice bran wax oxidate (V), of free aliphatic alcohols having 24 to 36 carbon atoms;
f) 0% to 5% by weight, preferably 0.1% to 5% by weight, based on the total weight of the partly saponified rice bran wax oxidate (V), of free aliphatic dicarboxylic acids having 10 to 30 carbon atoms;
g) 0% to 15% by weight, especially 0.1% to 10% by weight, based on the total weight of the partly saponified rice bran wax oxidate (V), of natural constituents of rice bran wax other than a) to f).

14. Partly saponified rice bran wax oxidate (V) according to Claim 12 or 13, prepared by a process according to at least one of Claims 1 to 11.

15. Use of the partly saponified rice bran wax oxidate (V) according to at least one of Claims 12 to 14 for agricultural or forestry purposes, as additive in plastics processing, in care products, in printing inks and/or in paints.

## Revendications

1. Procédé de production d'un oxydat de cire de son de riz partiellement saponifié (V),
comprenant les étapes suivantes
i) fournir une cire de son de riz (R) contenant moins de 20 % en poids, par rapport au poids total de la cire de son de riz (R), de polyesters formés à partir d'alcools polyhydriques et d'acides carboxyliques aliphatiques ayant de 8 à 20 atomes de carbone ;
ii) fournir un mélange (M) de trioxyde de chrome et d'acide sulfurique;
iii) effectuer l'oxydation de la cire de son de riz (R) en faisant réagir la cire de son de riz (R) avec le mélange (M) sous agitation et à une température de 90 à 150°C, afin d'obtenir un oxydat de cire de son de riz (O) ;
iv) terminer la réaction et laisser reposer le mélange réactionnel obtenu à l'étape iii) jusqu'à ce que la phase organique se soit séparée de la phase aqueuse ;
v) séparation de la phase organique;
vi) éliminer éventuellement les résidus contenant des composés de chrome de la phase organique afin d'obtenir l'oxydat de cire de son de riz (O) sous forme purifiée,
vii) répéter éventuellement la séquence des étapes ii) à vi) en utilisant l'oxydate de cire de riz (O), éventuellement sous forme purifiée, plutôt que la cire de son de riz (R),
viii) saponifier l'oxydat de cire de son de riz (O), éventuellement sous forme purifiée, en le faisant réagir avec un sel basique, de préférence un sel métallique basique, notamment choisi parmi les hydroxydes de métaux alcalins et les hydroxydes de métaux alcalino-terreux,
dans lequel aucun composant alcoolique n'est ajouté au mélange réactionnel de l'étape iii) à l'étape viii), de préférence à toutes les étapes de l'ensemble du processus.

2. Procédé selon la revendication 1, dans lequel l'oxydation à l'étape iii) est réalisée sur une période de 2 à 9 heures.

3. Procédé selon la revendication 1 ou 2, dans lequel la séquence des étapes ii) à vi) est répétée une à quatre fois, et dans lequel l'oxydat de cire de son de riz (O) obtenu à l'étape vii) ou éventuellement viii), éventuellement sous forme purifiée, est ajouté à la place de la cire de son de riz (R).

4. Procédé selon au moins l'une des revendications 1 à 3, dans lequel le rapport en poids entre la quantité totale de trioxyde de chrome utilisée et la cire de son de riz (R) utilisée est de 1:1 à 3:1, de préférence de 1,1:1 à 3:1.

5. Procédé selon au moins l'une des revendications 1 à 4, dans lequel l'étape d'élimination des résidus contenant des composés de chrome est effectuée à l'étape vi) et comprend le lavage de la phase organique avec une solution aqueuse d'acide oxalique et/ou d'acide sulfurique.

6. Procédé selon au moins l'une des revendications 1 à 5, dans lequel l'étape d'élimination des résidus contenant des composés de chrome est effectuée à l'étape vi) et comprend le lavage de la phase organique avec de l'eau.

7. Procédé selon au moins l'une des revendications 1 à 6, dans lequel l'étape d'élimination des résidus contenant des composés de chrome est effectuée à l'étape vi) et comprend la centrifugation de la phase organique.

8. Procédé selon au moins l'une des revendications 1 à 7, dans lequel la concentration de trioxyde de chrome dans le mélange (M) est de 50 à 200 g/l.

9. Procédé selon au moins l'une des revendications 1 à 8, dans lequel la vitesse de l'agitateur à l'étape iii) est comprise entre 100 et 500 tours/minute.

10. Procédé selon au moins l'une des revendications 1 à 9, dans lequel la saponification à l'étape viii) est effectuée sur une période de 0,5 à 10 h, de préférence à une température de 90 à 150°C.

11. Procédé selon au moins l'une des revendications 1 à 10, dans lequel aucun promoteur d'oxydation supplémentaire n'est ajouté au mélange réactionnel au cours de l'une quelconque des étapes.

12. . Oxydat de cire de son de riz partiellement saponifié (V), comprenant les composants suivants:
a) 30 à 85 % en poids, par rapport au poids total de l'oxydat de cire de son de riz partiellement saponifié (V), d'esters genuine ayant de 42 à 64 atomes de carbone;
b) 0 % à 70 % en poids, de préférence 10 % à 70 % en poids, par rapport au poids total de l'oxydat de cire de son de riz partiellement saponifié (V), de sels d'acides carboxyliques aliphatiques ayant de 8 à 36 atomes de carbone;
c) 0 % à 5 % en poids, en particulier 0 % à 3 % en poids, par rapport au poids total de l'oxydat de cire de son de riz partiellement saponifié (V), de polyesters formés à partir d'alcools polyhydriques et d'acides carboxyliques aliphatiques ayant de 22 à 36 atomes de carbone.

13. . Oxydat de cire de son de riz partiellement saponifié (V) selon la revendication 12, comprenant les composants suivants:
a) 30 à 85 % en poids, par rapport au poids total de l'oxydat de cire de son de riz partiellement saponifié (V), d'esters genuine ayant de 42 à 64 atomes de carbone;
b) 10 à 40 % en poids, par rapport au poids total de l'oxydat de cire de son de riz partiellement saponifié (V), de sels d'acides carboxyliques aliphatiques ayant de 8 à 36 atomes de carbone;
c) 0 % à 5 % en poids, en particulier 0 % à 3 % en poids, par rapport au poids total de l'oxydat de cire de son de riz partiellement saponifié (V), de polyesters formés à partir d'alcools polyhydriques et d'acides carboxyliques aliphatiques ayant de 22 à 36 atomes de carbone;
d) 5 à 40 % en poids, par rapport au poids total de l'oxydat de cire de son de riz partiellement saponifié (V), d'acides monocarboxyliques aliphatiques libres ayant de 8 à 36 atomes de carbone, dont, de préférence, pas plus de 10 % en poids, par rapport au poids total de l'oxydat de cire de son de riz partiellement saponifié (V), est de l'acide lignocérique ;
e) 0 % à 10 % en poids, de préférence 0,1 % à 5 % en poids, par rapport au poids total de l'oxydat de cire de son de riz partiellement saponifié (V), d'alcools aliphatiques libres ayant de 24 à 36 atomes de carbone ;
f) 0 % à 5 % en poids, de préférence 0,1 % à 5 % en poids, par rapport au poids total de l'oxydat de cire de son de riz partiellement saponifié (V), d'acides dicarboxyliques aliphatiques libres ayant de 10 à 30 atomes de carbone ;
g) 0 % à 15 % en poids, en particulier 0,1 % à 10 % en poids, par rapport au poids total de l'oxydat de cire de son de riz partiellement saponifié (V), de constituants naturels de la cire de son de riz autres que ceux mentionnés aux points a) à f).

14. . Oxydat de cire de son de riz partiellement saponifié (V) selon la revendication 12 ou 13, préparé par un procédé selon au moins l'une des revendications 1 à 11.

15. Utilisation de l'oxydat de cire de son de riz partiellement saponifié (V) selon au moins l'une des revendications 12 à 14 à des fins agricoles ou forestières, comme additif dans la transformation des matières plastiques, dans les produits de soins, dans les encres d'imprimerie et/ou dans les peintures.
